# NEW EUROPEAN PATENT SPECIFICATION

(11) **EP 0 776 401 B2**
(45) Date of publication and mention of the opposition decision: **21.09.2005**
(45) Mention of the grant of the patent: 18.09.2002
(21) Application number: 96918973.7
(22) Date of filing: 14.06.1996
(51) Int. Cl.: E04D 5/02, E04D 5/10

(54) **A WATER-PROOFING MEMBRANE FOR ROOFING**
ABDICHTENDE MEMBRAN FÜR DÄCHER
MEMBRANE IMPERMEABILISANTE POUR COUVERTURE

(30) Priority: 16.06.1995 SE 9502197
(43) Date of publication of application: 04.06.1997
(73) Proprietor: Trelleborg Building Systems AB, 263 21 Höganäs (SE)
(72) Inventor: RUNNEVIK, Lars, S-254 36 Helsingborg (SE)
(74) Representative: Jörgensson, Leif Sixten
(86) International application number: PCT/SE1996/000775
(87) International publication number: WO 1997/000362

(56) References cited:
- EP-A- 0 420 747
- DE-A- 2 752 490
- DE-A- 3 108 473
- DE-A- 3 940 727
- DE-C- 3 108 473
- DE-C- 3 534 076
- FR-A- 1 231 645
- SE-B- 337 902
- Zeitschrift: "Das Dachdecker-handwerk" von 1985, Heft 14/15; Seite 4

## Description

The present invention relates to a roofing waterproofing membrane, comprising at least one water-impervious and moisture-impervious first sub-layer of bitumen or like material, and a protective second sub-layer placed on top of the first sub-layer and enhancing the aging resistance of the bitumen layer.

Waterproofing membranes of the kind defined in the introduction have long been known and used in the art. In everyday language, such membranes are normally referred to as "roofing felt". However, modern waterproofing membranes are not cellulosic-based, but most often based on a polyester material. Paper-based roofing materials have been known since the end of the eighteenth century. The first to arrive was so-called "stenpapper"(stone paper), followed in the first half of the nineteenth century by hand-crafted paper sheets coated with charcoal tar. By 1862, continuous lengths of rag felt impregnated with black coal tar were being produced. Products requiring less maintenance impregnated with oil based bitumen were introduced at the beginning of the 20th century, the oil based bitumen being cleaner than coal tar and also able to withstand sunlight more effectively. It has long been known to include a protective layer, primarily a sand layer, probably since the early 1800s. Initially, this so called maintenance-free asphalted roofing felt was provided with a protective layer of talcum powder, which was later replaced in the 1900s with another material, primarily slate crush, which has been found to provide the best covering of all known protective materials and which also protects more effectively against sunlight than sand and talcum powder.

The waterproofing membrane of roofing structures is subjected to many different stresses and strains and must also fulfil many different requirements. For instance, the membrane is subjected to the effects of weather and wind, and the UV light of the sun places the asphalt layer, also referred to here as the bitumen layer, under severe strain which gradually results in cracking and crackling of the membrane. The wind exerts lifting forces on the roofing membrane. In addition, the roofing membrane must be able to withstand parallel movements of its supportive surface as said surface expands and contracts in response to changes in moisture and heat. The roofing membrane shall also, of course, fulfil its sealing function with respectto moisture and water and be able to withstand coverings of snow and also the weight of anyone standing on the roof. The membrane shall also be capable of withstanding the extremely strong forces generated by repeated icing of the roof and melting of the ice formations, which both have a detrimental effect on surface layers and surface coatings.

Bitumen-based waterproofing membranes must thus be provided with a protective layer against harmful UV light, among other things, so that their weather resistance and other properties that determine the effective lifetime of the membrane will not be impaired excessively. By "bitumen" is meant here and in the following both natural asphalt and oil asphalt, although other similar crude oil distillation products are also included in the term. Earlier, the bitumen layer on "roofing felt" was comprised of oxidized bitumen, which is relatively sensitive to UV light. By oxidized bitumen is understood a product which is obtained by blowing air through basic bitumen having a softening point of about 50°C, such as to obtain an oxidized product in which the softening point is increased to about 100°C and which has an effective temperature span of down to 0°C. Modem roofing membranes are comprised of so-called polymer-modified bitumen, which is produced by adding a stable polymer in a solid and finely-divided form into a basic bitumen. In this way, there is obtained a greater temperature span than that afforded by the oxidized bitumen product, namely a temperature span of from -10°C up to 140°C when adding an APP-type plastic (Atactic polypropylene) and from -25°C to 120°C when adding a thermoplastic elastomer, e.g. an SBS-type elastomer (styrene-butadiene-styrene). In addition, there is obtained improved flexibility and, to some extent, improved weather resistance and aging resistance and therewith a slightly longer lifetime. When the correct polymer is chosen and the admixture properly prepared, the weather resistance may even be so effective as to enable the crushed slate protective layer to be excluded. The roofing membrane is thus essentially improved and is cleaner to handle and splice. Despite these obvious advantages, however, no products of this nature have entered the market to any great extent, at least not in Sweden and other northern countries which experience a cold winter climate, since such membranes have apparently been judged to have other drawbacks in comparison with the protective coated roofing membranes.

Despite the manufacture, storage and use of conventional roofing membranes having slate-crush bitumen surfaces being encumbered with problems, these membrane materials still fully dominate the market. In the manufacture of such roofing materials, it is necessary to handle crushed slate which generates dust in the work place, is difficult to load and unload in respect of its transportation and is also difficult to apply in a uniform and dense layer in the manufacture of the membrane. It is the protective layer which, in principle, determines the effective lifetime of the bitumen layer. Because snow, ice and water will gradually wear away the slate granules from the bitumen layer, there arises the problem of replacing or restoring the protective layer, and also of removing loose slate granules from guttering and drains and from the general surroundings. Because the slate layer is relatively heavy, the roofing material will also be heavy to handle and to work with. However, it is still desired to retain the important advantages that are afforded by bitumen-based roofing membranes, for instance the ease in which such membranes can be joined together, their relatively long effective lifetime, the use of existing expertise and experience, the effective sealing ability of such membranes at reasonable manufacturing, application and maintenance costs.

The object of the present invention is to provide a bitumen-based roofing membrane with which the important advantages afforded by the use of bitumen can still be utilized but with which the disadvantages associated with hitherto known and used roofing membranes have been totally eliminated.

The invention is characterized to this end by the features set forth in the following Claims. The inventive roofing membrane has a second sub-layer, a protective layer, comprised of polymer foil or film that is laminated onto the first sub-layer, the bitumen layer. Such a roofing membrane will by means of said second sub-layer have an environmentally non-dusting surface structure and be essentially totally maintenance-free and have a useful life span that is independent of the aging properties of the bitumen layer. The effective lifetime of the membrane will thus not be restricted to the effective lifetime of the actual bitumen layer as is otherwise the case with conventional bitumen-based membranes. If the bitumen layer should crack or crackle, the polymer layer wil provide an effective seal as long as the polymer layer does not itself crack or be destroyed. Any cracking or impairment of the polymer layer can be readily repaired with the aid of heat and a repair kit. The protective ability of the polymer layer is fully on the level of the granules hitherto used.

A thermoelastic elastomer, e.g. an EPDM (ethylene-propylene diene monomer), a TPO (thermoplastic olefin), SEBS (styrene ethylene-butane-styrene) and EVA (ethylene vinyl acetate) provides the best lamination and affords the best protection. The protective polymer layer may have a thickness of up to 1 mm, although a thickness of 0.1-0.5 mm is preferred. The roofing membrane may have a total thickness of 1-5 mm, although preferably a thickness of 2-4 mm. The membrane may be provided with a protective polymer on both sides thereof to improve its handling properties and its usefulness.

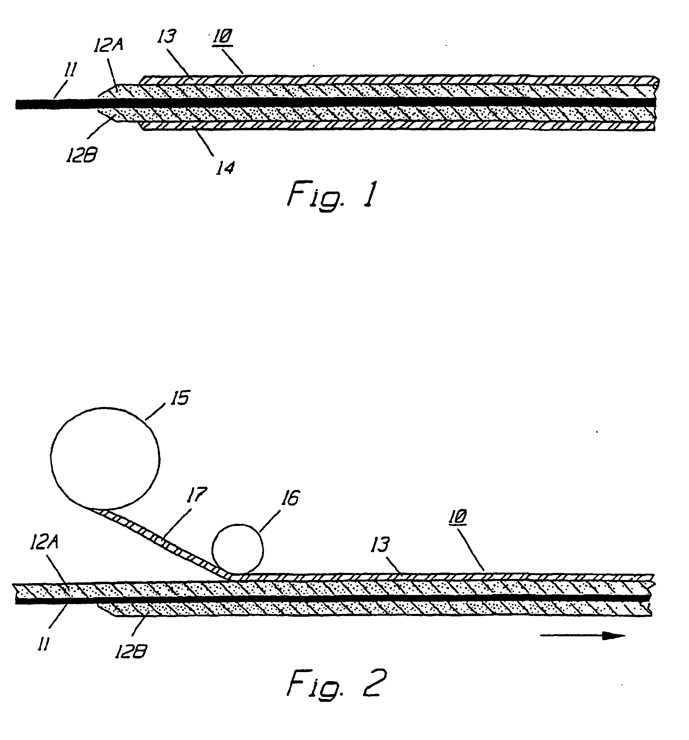

The invention will now be described in more detail with reference to the accompanying drawing in which Figure 1 is a schematic cross-sectional view of a typical inventive roofing membrane; and Figure 2 illustrates the manufacture of such a membrane.

Figure 1 is a cross-sectional view of a roofing membrane 10. The membrane 10 has a base 11, which suitably comprises a non-woven polyester reinforcement on which a bitumen layer 12 has been applied to both sides of the base to a typical thickness of 1-3 mm. Applied on top of the upper bitumen layer 12A is a protective layer 13 comprised of polymer film or polymer foil and having a thickness of normally 0.1-0.5 mm. This protective layer 13 is intended to protect the underlying bitumen layer 12 from the effects of weather and wind, primarily from UV radiation from the sun. The lower bitumen layer 12B is protected by a second protective layer 14 which may be comprised of the same material as the protective layer 13 or of some other suitable material when it is not required to protect against weather and wind but only against the soiling and dirtying effect of the bitumen as the membrane is rolled up and handled.

Figure 2 illustrates a stage in the manufacture of a roofing membrane 10 in accordance with the invention. The Figure illustrates the manner in which the upper protective layer 13 is applied to the bitumen layer 12A as the membrane moves to the right in the Figure, shown by the arrow. The polymer film or polymer foil 17 is taken from a storage reel 15 and pressed heavily by a roll 16 against and down into the bitumen layer 12A while said layer is still tacky.

Although only the upper part of the membrane 10 has been shown in the Figure, it will be understood that a second protective layer (not shown) may be applied to the lower bitumen layer 12B at the same time, or in conjunction with applying the upper protective layer 13.

As will be shown below, a protective layer which has the form of a polymer film or polymer foil provides important advantages in comparison with conventional roofing membrane materials. These advantages are:
- A uniform and smooth surface.
- Gives the impression of rubber instead of roofing felt, which can give a certain feeling of status.
- The surface can be coloured and embossed, e.g. with a brickwork structure.
- The absence of slate shingles that are liable to block drains and guttering and create dirty and littered environments.
- A substantial reduction in weight, which has ergonomical advantages when handling the membrane and enables larger sizes, thicker and/or longer rolls to be used, fewer splices and fewer operational disruptions in manufacture.
- Ice-proof, i.e. water is unable to penetrate into the layer and cause the layer to burst when freezing.
- Makes recycling possible and facilitates the cycle of operations for these products.

## Claims

1. A waterproofing membrane for roofing comprising at least one water and moisture impervious first sub-layer of bitumen and a second sub-layer which is applied over the first sub-layer and which enhances the aging resistance of the bitumen layer, **characterized in that** the second sub-layer is comprised of a thermoplastic elastomer film or thermoplastic elastomer foil that is laminated to the first sub-layer, whereby the roofing membrane by means of said second sub-layer obtains an essentially fully maintenance-free and environmentally-friendly non-dusting surface structure and an effective lifetime that is independent of the aging properties of the bitumen layer.

2. A roofing membrane according to Claim 1, **characterized in that** the thermoplastic elastomer is of the type EPDM, TPO, SEBS or EVA.

3. A roofing membrane according to Claims 1-2, **characterized in that** the protective polymer layer has a thickness of at most 1 mm and preferably a thickness within the range 0.1-0.5 mm.

4. A roofing membrane according to Claims 1-3, **characterized in that** the total thickness is 1-5 mm, although is preferably 2-4 mm.

5. A roofing membrane according to Claims 1-4, **characterized in that** both sides of the membrane are coated with protective polymer.

## Patentansprüche

1. Abdichtmembran für ein Dach mit wenigstens einer wasser- und feuchtigkeitsdichten ersten Unterschicht aus Bitumen und einer zweiten Unterschicht, welche über der ersten Unterschicht angebracht ist und welche die Alterungsbeständigkeit der Bitumenschicht verbessert, **dadurch gekennzeichnet, daß** die zweite Unterschicht aus einem Film aus thermoplastischem Elastomer oder einer Folie aus thermoplastischem Elastomer besteht, die auf die erste Unterschicht laminiert ist, wobei die Dachmembran durch die zweite Unterschicht eine im wesentlichen vollständig wartungsfreie und umweltfreundliche, nicht staubende Oberflächenstruktur und eine tatsächliche Lebensdauer, die von den Alterungseigenschaften der Bitumenschicht unabhängig ist, erhält.

2. Dachmembran nach Anspruch 1, **dadurch gekennzeichnet, daß** das thermoplastische Elastomer vom Typ EPDM, TPO, SEBS oder EVA ist.

3. Dachmembran nach einem der Ansprüche 1 bis 2, **dadurch gekennzeichnet, daß** die schützende Polymerschicht eine Dicke von höchstens 1 mm und vorzugsweise eine Dicke im Bereich von 0,1 - 0,5 mm hat.

4. Dachmembran nach einem der Ansprüche 1 bis 3, **dadurch gekennzeichnet, daß** die Gesamtdicke 1 - 5 mm und vorzugsweise 2 - 4 mm beträgt.

5. Dachmembran nach einem der Ansprüche 1 bis 4, **dadurch gekennzeichnet, daß** beide Seiten der Membran mit schützendem Polymer beschichtet sind.

## Revendications

1. Membrane imperméabilisante pour couverture comprenant au moins une première sous-couche de bitume imperméable à l'eau et à l'humidité et une deuxième sous-couche appliquée sur la première sous-couche renforçant la résistance au vieillissement de la couche de bitume, **caractérisée en ce que** la deuxième sous-couche contient une pellicule élastomère thermoplastique ou une feuille en élastomère thermoplastique laminée à la première sous-couche, où la membrane de couverture, moyennant ladite deuxième sous-couche, parvient à acquérir une structure de surface anti-poussière, écologique qui se maintient essentiellement libre de façon totale, ayant une durée de vie réelle indépendante des propriétés de vieillissement de la couche de bitume.

2. Membrane imperméabilisante selon la revendication 1, **caractérisée en ce que** l'élastomère thermoplastique est du type EPDM, TPO, SEBS ou EVA.

3. Membrane imperméabilisante selon les revendications 1-2, **caractérisée en ce que** la couche de protection de polymère a une épaisseur maximale d'1 mm et de préférence, une épaisseur située entre 0.1 et 0. 5 mm

4. Membrane imperméabilisante selon les revendications 1-3, **caractérisée en ce que** l'épaisseur totale est de 1-5 mm, quoique celle-ci est préférablement située entre 2 et 4 mm.

5. Membrane imperméabilisante selon les revendications 1-4, **caractérisée en ce que** les deux côtés de la membrane sont revêtus avec un polymère de protection.
